(19) Europäisches Patentamt
European Patent Office
Office européen des brevets

(11) Veröffentlichungsnummer: **0 225 598 B1**

(12) # EUROPÄISCHE PATENTSCHRIFT

(45) Veröffentlichungstag der Patentschrift: **14.08.91**

(51) Int. Cl.5: **C10M 145/14**, //(C10M145/14, 145:14,149:04,149:06,149:10), C10N30:02

(21) Anmeldenummer: **86116796.3**

(22) Anmeldetag: **03.12.86**

Die Akte enthält technische Angaben, die nach dem Eingang der Anmeldung eingereicht wurden und die nicht in dieser Patentschrift enthalten sind.

(54) **Hochscherstabile Mehrbereichsschmieröle mit verbessertem Viskositätsindex.**

(30) Priorität: **13.12.85 DE 3544061**

(43) Veröffentlichungstag der Anmeldung: **16.06.87 Patentblatt 87/25**

(45) Bekanntmachung des Hinweises auf die Patenterteilung: **14.08.91 Patentblatt 91/33**

(84) Benannte Vertragsstaaten: **BE DE FR GB IT NL SE**

(56) Entgegenhaltungen: **EP-A- 0 140 274**

(73) Patentinhaber: **Röhm GmbH**
**Kirschenallee Postfach 4242**
**W-6100 Darmstadt 1(DE)**

(72) Erfinder: **Pennewiss, Horst, Dr.Dipl.-Chem.**
**Meissnerweg 53**
**W-6100 Darmstadt(DE)**
Erfinder: **Jost, Heinz**
**Am Steimel 6a**
**W-6101 Modautal 3(DE)**
Erfinder: **Knöll, Helmut**
**Brandauer Klinger 16**
**W-6147 Lautertal 1(DE)**

EP 0 225 598 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft hochscherstabile Mehrbereichsöle, insbesondere Getriebeöle auf der Basis von paraffinischen Grundölen, die in Mengen von 3 bis 60 Gew.-% Viskositäts-Index-verbessernde Additive auf Basis von Estern der Acryl- bzw. der Methacrylsäure enthalten.

Stand der Technik

Die hervorragende Eignung von Polyalkylmethacrylaten (PAMA) als Schmieröladditive infolge ihrer Viskositätsindex-verbessernden und stockpunktserniedrigenden Wirkung wird seit längerem technisch ausgewertet. (Vgl. Ullmanns Encyklopädie der Techn. Chemie, 4. Auflage, Bd. 20, pg. 545-547, Verlag Chemie).
Aus der EU-A 0 140 274 sind multifunktionelle Additive für n-paraffinhaltige Schmieröle bekannt, die Mischungen aus (Meth)-Acrylsäureestern darstellen.
Diese Mischungen bestehen aus:

I. 10 - 99 Gew.-% an Polymeren $P_1$, die
  a) aus (Meth)acrylsäureestern von geradkettigen, unverzweigten $C_6$-$C_{15}$-Alkoholen mit 6 bis 15 Kohlenstoffatomen und
  b) aus (Meth)acrylsäureestern von geradkettigen unverzweigten $C_{16}$-$C_{30}$-Alkoholen und
  c) aus (Meth)acrylsäureestern mit verzweigten $C_8$-$C_{40}$-Alkoholen,
  d) aus (Meth)acrylsäureestern von $C_1$-$C_5$ Kohlenstoffatomen,
  e) aus Monomeren, mit funktionellen Gruppen aufgebaut sind,

wobei der Anteil an b) höchstens 5 Mol-% ausmacht, und

II. 90 - 1 Gew.-% an Polymeren $P_2$, die
  a') aus (Meth)acrylsäureestern von geradkettigen unverzweigten $C_6$-$C_{15}$-Alkoholen und
  b') aus (Meth)acrylsäureestern von geradkettigen, unverzweigten $C_{16}$-$C_{30}$-Alkoholen und
  c') aus (Meth)acrylsäureestern von verzweigten $C_8$-$C_{40}$-Alkoholen und
  d') aus (Meth)acrylsäureestern von $C_1$-$C_5$-Alkoholen,
  e') aus Monomeren mit funktionellen Gruppen aufgebaut sind,

wobei der Anteil an b') 10 - 70 Mol-% ausmacht, mit einem Lösungsmittel (L).

Die Additive der EU-A wirken nicht nur als "Pour Point"-Verbesserer, sondern sie beeinflussen auch die Viskositätseigenschaften der Öle in Abhängigkeit von der Temperatur und zwar sowohl bei hohen als bei tiefen Temperaturen. Sie wurden in der Absicht entwickelt, Additive zur Verfügung zu haben, welche die Gebrauchseigenschaften der neuerdings auf den Markt kommenden sogenannten "kritischen Grundöle" (d.h. qualitativ schlechterer, wenig entparaffinierter Grundöle) in den technisch erforderlichen Bereich rücken.

Aufgabe

Die Additive des Standes der Technik können jedoch nicht sämtliche Anforderungen in gleich befriedigender Weise erfüllen, die an die Technik herangetragen werden.
Die Anforderungen der Technik an Schmieröle spiegeln sich in den gebräuchlichen Spezifikationen nach Klassen wider, z.B. SAE J 306 C für Hinterachs- und Schaltgetriebe oder SAE J 300 April 84 für Verbrennungsmotoren.

Mehrbereichsöle, welche den Viskositätsklassen SAE 75 W-90, für Getriebeöle oder 10 W-40 für Motorenöle entsprechen, können z.B. praktisch zu allen Jahreszeiten benutzt werden. Ihre Anwendung ermöglicht längere Ölwechsel-Intervalle bei verringerten Reibungsverlusten. Eine besondere Gruppe von Schmierölen stellen z.B. die hochscherstabilen Mehrbereichsöle, insbesondere die als Getriebeöle verwendeten Provenienzen dar. (Vgl. Ullmanns Encyklopädie loc.cit., Bd. 20, S. 591-606).

Besondere Probleme bieten die Anforderungen der sehr scherstabilen Mehrbereichsgetriebeöle auf Basis paraffinischer Grundöle der Spezifikation 75 W-90 an die Additive. Dabei liegt der Additiv-Zusatz im allgemeinen im Bereich bis zu 60 Gew.-%, insbesondere 10 bis 30 Gew.-%, bezogen auf die paraffinischen Grundöle. Es bestand nach wie vor ein Bedarf an VI-verbessernden Additiven für derartige sehr scherstabile Mehrbereichsöle, insbesondere Getriebeöle.

Lösung

Es wurde nun gefunden, daß sehr scherstabile Mehrbereichsöle die Anforderungen der Technik in besonderem Maße für Getriebeöle erfüllen, wenn sie als Additive Mischungen aus wenigstens zwei untereinander verschiedenen Polymerspecies P in Mengen von 10 bis 20 Gew.-%, vorzugsweise 12 bis 18 Gew.-%, bezogen auf die Mehrbereichsöle, enthalten, wobei jede der Polymerspecies P aufgebaut ist aus

a) Estern der Methacryl-, der Acrylsäure oder beiden mit geradkettigen, unverzweigten Alkoholen mit mindestens 6 und höchstens 15 Kohlenstoffatomen und

b) Estern der Methacryl-, der Acrylsäure oder beiden mit geradkettigen, unverzweigten Alkoholen mit 16 bis 30 Kohlenstoffatomen und

c) Estern der Methacryl-, der Acrylsäure oder beiden mit verzweigten Alkoholen mit 8 bis 40 Kohlenstoffatomen,

d) Estern der Methacryl-, der Acrylsäure oder beiden mit Alkoholen mit 1 bis 7 Kohlenstoffatomen,

e) radikalisch copolymerisierbaren Monomeren, die funktionelle Gruppen im Molekül aufweisen, aufgebaut sind,

wobei der Anteil des Bestandteils a)10 - 100 Mol-%, der Anteil des Bestandteils b) 0 - 5 Mol-%, der Anteil des Bestandteils c) 0 bis 90 Mol.- %, der Anteil des Bestandteils d) 0 bis 50 Mol.-%, der Anteil des Bestandteils e) 0 bis 20 Mol-% und die Summe aus a) bis e) ingesamt 100 Mol-% ausmacht, mit der Maßgabe, daß sich die einzelnen Polymerspecies $P_1$, $P_2$ und gegebenenfalls weitere, in Bezug auf den Gehalt an der Komponente a) um mindestens 10 Mol-% unterscheiden. Die Wirkung der erfindungsgemäßen Mischungen aus den Polymerspecies $P_1$, $P_2$ usw. ist der Wirkung jeder der Komponenten für sich angewendet - überlegen.

Vorzugsweise beträgt der Anteil der Komponente b) 2 bis 4 Mol-%, der Anteil der Komponente c) 20 bis 60, Mol-% der Anteil der Komponente d) 5 bis 30 Mol-%, der Anteil an der Komponente e) 0 bis 10 Mol-%, bezogen auf die individuellen Polymerspecies $P_1$, $P_2$ und gegebenenfalls weitere Polymerspecies $P_3$, $P_4$, $P_5$.

Für die Komponenten a) gilt:
Bevorzugt sind Acryl- bzw. Methacrylsäureester mit geradkettigen unverzweigten $C_{10}$-$C_{14}$-Alkoholen, z.B. hergestellt nach dem Ziegler-Verfahren durch Hydrolyse von Aluminiumalkoxiden. Genannt seien z.B. die Produkte Lorole® der Fa. Henkel KG, Düsseldorf und Alfole®, Produkte der Firma Condea, Hamburg.

Für die Komponenten b) gilt, daß sie vorzugsweise Acryl- bzw. Methacrylsäureester von geradkettigen, unverzweigten $C_{16}$-$C_{24}$-Alkoholen, besonders von $C_{16}$-$C_{20}$-Alkoholen darstellen. Genannt seien die Talgfettalkohole und Alfole® (Produkte der Fa. Condea).

Für die Komponenten c) gilt, daß sie vorzugsweise aus Estern der Acryl- bzw. der Methacrylsäure mit verzweigten $C_8$-$C_{20}$-Alkoholen des Iso-Alkanol-Typs, insbesondere aus Isodecyl-, Isotridecyl-und Isooctadecylalkoholen besteht.

Der Ester der (Meth)acrylsäure mit z.B. Dobanol 25L® (Produkt der Firma Shell-Chemie) wäre anteilmäßig sowohl der Komponente a) als auch der Komponente c) zuzuordnen.

Die Komponenten a), b), c), d) und e) können ihrerseits auf Polyolefine bzw. Olefincopolymerisate (OCP) gepfropft sein.

Die erfindungsgemäßen hochscherstabilen Mehrbereichsschmieröle können zusätzlich noch 0,05 - 1,0 Gew.-%, bezogen auf die Mehrbereichsöle an stockpunktsverbessernden Zusätzen (s. unten) enthalten.
Die Molgewichte $\overline{M}w$ der Polymerisate P liegen im allgemeinen im Bereich 20 000 bis 150 000. *) Die Herstellung der Polymerisate $P_1$, $P_2$ usw. kann nach Maßgabe der gewünschten Zusammensetzung durch Polymerisation der Monomeren a) bis e) gemäß den üblichen radikalischen Polymerisationsverfahren vorgenommen werden.

Unter der Komponente e) der Polymeren P seien definitionsgemäß radikalisch polymerisierbare Monomere mit funktionellen Gruppen im Molekül verstanden, insbesondere solchen, deren positive Wirkung bei Öladditiven im Sinne von Dispergier- bzw. Detergenzaktivität bekannt ist. Genannt seien z.B. Verbindungen der allgemeinen Formel I

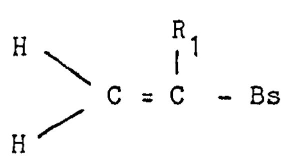

I

*) (Bestimmt durch Gelpermeationschromatographie)

worin $R_1$ Wasserstoff oder Methyl und $B_s$ einen (inerten) heterocyclischen 5- oder 6-gliedrigen Ring oder einen Rest

$$-\overset{\overset{\displaystyle O}{\|}}{C}-Z-Q-NR_2R_3$$

bedeutet, wobei Z für Sauerstoff oder einen Rest $-NR_4$ und Q für eine gegebenenfalls alkylierte Kohlenwasserstoffbrücke mit insgesamt 2 bis 10 Kohlenstoffatomen und $R_2$ und $R_3$ jeweils für einen Alkylrest mit 1 bis 6 Kohlenstoffatomen stehen oder zusammen unter Einbeziehung des Stickstoffs und gegebenenfalls anderer Heteroatome einen heterocyclischen 5- oder 6-gliedrigen Ring bilden können und worin $R_4$ für Wasserstoff oder einen Alkylrest mit 1 bis 6 Kohlenstoffatomen steht.

Genannt seien z.B. C- und N-Vinylpyridin-, Vinylpyrrolidon, Vinylcarbazol, Vinylimidazol sowie deren Alkylderivate, insbesondere die N-Vinylverbindungen, ferner die Dialkylaminoalkylester der (Meth)-acrylsäure, speziell Dimethylaminoäthylacrylat und -methacrylat, Dimethylaminopropylacrylat, -methacrylat sowie die entsprechenden Amide (Dialkylaminoalkylacryl- bzw. -methacrylamide) wie z.B. das Dimethylaminopropyl(meth)acrylamid.

Die hochscherstabilen Mehrbereichsöle

Unter hochscherstabilen Mehrbereichsölen im Sinne der vorliegenden Erfindung seien im Einklang mit den üblichen Definitionen Mehrbereichsgetriebeöle, insbesondere der SAE-Klasse 75 W-90 verstanden. (Vgl. SAE J 306 C). Nähere Angaben zur SAE-Klassifizierung können z.B. DIN 51 511 und DIN 51 512 entnommen werden.

Die paraffinischen Grundöle

Als paraffinische Grundöle kommen solche der Viskosität 3 - 8 $mm^2/s$ bei 100°C in Betracht, insbesondere Mischungen der Schnitte NS 100/NS 150. Nähere Angaben zu den paraffinischen Grundölen können z.B. Ullmanns Encyklopädie der techn. Chemie, 4. Auflage, Bd. 20, pg, 487-503, oder Alphonse Schilling, Motor Oils and Engine Lubrication, 2nd Engl. Ed., 1968, pg. 2.2 - 2.21 entnommen werden.

Die stockpunktverbessernden Zusätze

Als stockpunktverbessernde Zusätze, die den erfindungsgemäßen, hochscherstabilen Mehrbereichsölen noch zugesetzt werden können (s.oben) seien Polyalkyl(meth)acrylate mit Alkylresten von $C_{12}$-$C_{18}$-genannt, z.B. Verkaufsprodukte der Röhm GmbH, wie ®Viscoplex 1-31, 1-33, 1-35.

Herstellung der Polymerisate $P_1$ bzw. $P_2$

Die Herstellung der Polymerisate schließt an die Polymerisationsverfahren des Standes der Technik an. (Vgl. Houben-Weyl, 4. Auflage, Bd. XIV.)
In einem Reaktionsgefäß, das zweckmäßig mit Rührer, Thermometer, Rückflußkühler und Dosierleitung ausgestattet ist, wird eine Mischung aus Mineralöl und einer Monomerenmischung je nach gewünschter Zusammensetzung aus a), b), c), d) und e) vorgelegt. Unter $CO_2$-Atmosphäre und Rühren wird auf ca. 90 - 100°C erhitzt. Nach Erreichen dieser Temperatur und Zugabe von Initiator (vorzugsweise Perverbindungen wie Perester, Peroxiden oder Azoverbindungen und gegebenenfalls Regler (Mercaptoverbindungen) wie z.B. Dodecylmercaptan) - vgl. Brandrup-Immergut, Ed. Polymer Handbook 2nd, Ed. J. Wiley, 1975 und Houben-Weyl loc.cit., Band XIV - wird eine Mischung aus den Monomeren a), b), c), d) und e) sowie weiterer Initiator und gegebenenfalls Regler zudosiert; ca. 2 Stunden nach Ende des Zulaufs wird weiterer Initiator und gegebenenfalls Regler nachgefüttert. Die Gesamtinitiatormenge liegt in der Regel bei 0,5 - 3 Gew.-%, die Reglermenge bei 0,1 - 2,0 Gew.-%, bezogen auf die Gesamtmenge der Monomeren. Die Gesamtpolymerisationszeit beträgt im allgemeinen 8 - 9 Stunden. Man erhält eine viskose Lösung mit einem Polymerisatgehalt von im allgemeinen 40 - 70 Gew.-%.

Herstellung der Polymermischungen aus den Komponenten $P_1$ und $P_2$ und gegenbenenfalls weiteren Komponenten

Dabei kann wie folgt vorgegangen werden:
Eine Komponente wird in einem geeigneten Behälter vorgelegt und unter Rühren auf ca. 80 - 120 °C erhitzt. Die Zumischkomponenten werden ebenfalls auf ca. 80 - 120 °C erhitzt und zur vorgelegten Komponente unter Rühren möglichst rasch zudosiert.

Herstellung der Mehrbereichsschmieröle

Das viskositätserhöhende Additiv wird zusammen mit weiteren Zusatzstoffen. wie DI-Paket. bei 50 - 60 °C unter Rühren im Grundöl gelöst.

Verwendung der sehr scherstabilen Mehrbereichsöle

Die erfindungsgemäßen scherstabilen Mehrbereichsöle werden besonders als Getriebeöle eingesetzt. Vorteilhafte Wirkungen der Erfindung liegen u.a. darin, daß man Mehrbereichsgetriebeöle der SAE-Klasse 75 W-90 auf reiner Basis paraffinischer Mineralöle herstellen kann. Erfindungsgemäße Ölformulierungen zeigen neben den erforderlichen Viskositätsdaten bei 100 °C sehr günstige Viskositätsdaten bei -15 °C bis -40 °C.

Die Charakterisierung kann durch folgende Messungen erfolgen:
Brookfield-Viskosität: (DIN 51 398 / ASTM D 2183)
Kapillarviskosität (ASTM D 445)

Beispiele

Herstellung der Öladditive

Additiv A

In einem 2 1-Vierhalskolben mit Rührer, Thermometer, Rückflußkühler und Dosierleitung wird folgende Mischung vorgelegt:
412,5 g Mineralöl ( $\eta_{100°C}$ = 3,9 $mm^2/s$)
37,8 g Methacrylsäureester eines $C_{12}$-$C_{15}$-Alkoholgemisches mit 60 % verzweigten Alkoholen
1,1 g Methacrylsäureester eines n-$C_{16}$-$C_{18}$-Alkoholgemisches
6,9 g Methylmethacrylat
0,4 g Dodecylmercaptan
0,4 g tert.-Butylperoctoat.
Nach Lösen der Komponenten wird bei 100 °C nachstehendes Gemisch über einen Zeitraum von 210 Minuten zudosiert
859,5 g Methacrylsäureester eines $c_{12}$-$C_{15}$-Alkoholgemisches mit 60 % verzweigten Alkoholen
26,0 g Methacrylsäureester eines n-$C_{16}$-$C_{18}$-Alkoholgemisches
156,2 g Methylmethacrylat
2,6 g tert.-Butylperoctoat
9,4 g Dodecylmercaptan.
Zwei Stunden nach Zulaufende wird mit 2,2 g tert.-Butylperoctoat nachgefüttert. Gesamtpolymerisationszeit 8 Stunden. Es wird eine klare, viskose Lösung erhalten.
Polymerisatgehalt = 72,5 Gew.-%
Viskosität (100 °C, 72,5 Gew.-%ig) = 800 $mm^2/s$
Viskosität (100 °C, 7,25 Gew.-%ig in Mineralöl mit $\eta_{100°C}$ = 5,4 $mm^2/s$) = 9,8 $mm^2/s$
SSI [1)](11,2 Gew.-%ig in Mineralöl mit $\eta_{40°C}$ = 2,71 $mm^2/s$) = 8,0

Additiv B

Herstellung und Daten wie Additiv A. aber
Vorlage: 412,5 g Mineralöl ($\eta_{100°C}$ = 3,9 $mm^2/s$)
36,9g Methacrylsäureester eines $C_{12}$-$C_{15}$-Alkoholgemisches mit 23 % verzweigten Alkoholen

1) SSI = Scherstabilitätsindex = Verlust an Verdickungswirkung in % bei Scherstabilitätsprüfung nach ASTM-D-2603.

0,9 g Methacrylsäureester eines n-$C_{16}$-$C_{18}$-Alkoholgemisches
6,9 g Methylmethacrylat
0,4 g Dodecylmercaptan
0,4 g tert.-Butylperoctoat

Zulauf: 864,5 g Methacrylsäureester eines $C_{12}$-$C_{15}$-Alkoholgemisches mit 23 % verzweigten Alkoholen
21,0 g Methacrylsäureester eines n-$C_{16}$-$C_{18}$-Alkoholgemisches
156,2 g Methylmethacrylat
2,6 g tert.-Butylperoctoat
9,4 g Dodecylmercaptan

Additiv C

Herstellung wie Additiv A, aber

Vorlage: 435 g Mineralöl ($\eta_{100°C}$ = 3,9 $mm^2/s$)
40,8 g Methacrylsäureester eines $C_{12}$-$C_{15}$-Alkoholgemisches mit 60 Gew.-% verzweigten Alkoholen
7,2 g Methylmethacrylat
0,53 g Dodecylmercaptan
0,4 g tert.-Butylperoctoat

Zulauf: 905,3 g Methacrylsäureester eines $C_{12}$-$C_{15}$-Alkoholgemisches mit 60 Gew.-% verzweigten Alkoholen
159,7 g Methylmethacrylat
11,7 g Dodecylmercaptan
2,7 g tert.-Butylperoctoat

Polymerisatgehalt = 71,0 Gew.-%
Viskosität (100° C, 71,0 Gew.-%ig) = 460 $mm^2/s$
Viskosität (100° C, 7,1 Gew.-%ig in Mineralöl mit $\eta_{100°C}$ = 5,4 $mm^2/s$) = 8,5 $mm^2/s$
SSI [1](11 Gew.-%ig in Mineralöl mit $\eta_{40°C}$ = 2,71 $mm^2/s$) = 3,0

Additiv D

Herstellung und Daten wie Additiv C, aber

Vorlage: 435 g Mineralöl ($\eta_{100°C}$ = 3,9 $mm^2/s$)
39,6 g Methacrylsäureester eines $C_{12}$-$C_{15}$-Alkoholgemisches mit 23 Gew.-% verzweigten Alkoholen
1,2 g Methacrylsäureester eines n-$C_{16}$-$C_{18}$-Alkoholgemisches
7,2 g Methylmethacrylat
0,53 g Dodecylmercaptan
0,4 g tert.-Butylperoctoat

Zulauf: 878,7 g Methacrylsäureester eines $C_{12}$-$C_{15}$-Alkoholgemisches mit 23 Gew.-% verzweigten Alkoholen
26,6 g Methacrylsäureester eines n-$C_{16}$-$C_{18}$-Alkoholgemisches
159,7 g Methylmethacrylat
11,7 g Dodecylmercaptan
2,7 g tert.-Butylperoctoat

Additiv E

In einem 2 1-Vierhalskolben mit Rührer, Thermometer, Rückflußkühler und Dosierleitung wird folgende Mischung vorgelegt:
412,5 g Mineralöl ($\eta_{100°C}$ = 3,9 $mm^2/s$)
35,44 g Methacrylsäureester eines $C_{12}$-$C_{15}$-Alkoholgemisches mit 60 % verzweigten Alkoholen
1,04 g Methacrylsäureester eines n-$C_{16}$-$C_{18}$-Alkoholgemisches
7,46 g n-Butylmethacrylat

1) SSI = Scherstabilitätsindex = Verlust an Verdickungswirkung in % bei Scherstabilitätsprüfung nach ASTM-D-2603

1,86 g 2-Dimethylaminoethyl-methacrylat
0,4 g Dodecylmercaptan
0,4 g tert.-Butylperoctoat
Nach Lösen der Komponenten wird bei 100 °C nachstehendes Gemisch über einen Zeitraum von 210 Minuten zudosiert
806,28 g Methacrylsäureester eines $C_{12}$-$C_{15}$-Alkoholgemisches mit 60 % verzweigten Alkoholen
23,54 g Methacrylsäureester eines n-$C_{16}$-$C_{18}$-Alkoholgemisches
169,59 g n-Butylmethacrylat
42,29 g 2-Dimethylaminoethyl-methacrylat
2,6 g tert.-Butylperoctoat
9,4 g Dodecylmercaptan
Zwei Stunden nach Zulaufende wird mit 2,2 g tert.-Butylperoctoat nachgefüttert. Gesamtpolymerisationszeit 8 Stunden. Es wird eine klare, viskose Lösung erhalten.
Polymerisatgehalt = 72,5 Gew.-%
Viskosität (100 °C, 72,5 Gew.-%ig) = 800 $mm^2/g$
Viskosität (100 °C, 7,25 Gew.-% in Mineralöl mit $\eta_{100°C}$ = 5,4 $mm^2/s$) = 9,8 $mm^2/s$
SSI [1)](11,2 Gew.-%ig in Mineralöl mit $\eta_{40°C}$ = 2,71 $mm^2/s$) = 8,0

Additiv F

Herstellung und Daten wie Additiv A, aber

Vorlage:
412,5 g Mineralöl ($\eta_{100°C}$ = 3,9 $mm^2/s$)
34,56 g Methacrylsäureester eines $C_{12}$-$C_{15}$-Alkoholgemisches mit 23 % verzweigten Alkoholen
0,8 g Methacrylsäureester eines n-$C_{16}$-$C_{18}$-Alkoholgemisches
7,51 g n-Butylmethacrylat
1,83 g 2-Dimethylaminoethyl-methacrylat
0,4 g Dodecylmercaptan
0,4 g tert.-Butylperoctoat

Zulauf:
805,24 g Methacrylsäureester eines $C_{12}$-$C_{15}$-Alkoholgemisches mit 23 % verzweigten Alkoholen
18,75 g Methacrylsäureester eines n-$C_{16}$-$C_{18}$-Alkoholgemisches
175,00 g n-Butylmethacrylat
42,71 g 2-Dimethylaminoethyl-methacrylat
2,6 g tert.-Butylperoctoat
9,4 g Dodecylmercaptan

1) SSI = Scherstabilitätsindex = Verlust an Verdickungswirkung in % bei Scherstabilitätsprüfung nach ASTM-D-2603.

Tabelle 1: Vergleichsbeispiele

| Vergleichs-Beispiel Nr. | Additiv Nr. | Formulierung 75W-90 | Viskosität nach ASTM-D-445 bei 100°C $mm^2/s$ | Viskosität nach ASTM-D-2983 bei -40°C mPa s | SSI[1)] |
|---|---|---|---|---|---|
| 1 | A | I | 13,6 | nicht meßbar fest | 8,0 |
| 2 | B | I | 13,6 | 312 000 | 8,0 |
| 3 | C | II | 13,6 | nicht meßbar fest | 3,0 |
| 4 | D | II | 13,6 | nicht meßbar fest | 3,0 |
| 5 | E | I | 13,6 | nicht meßbar fest | 8,0 |
| 6 | F | I | 13,6 | 360 000 | 8,0 |

I
20 Gew.-% Additiv
38,85 Gew.-% NS 100-Öl
34,45 Gew.-% NS 150-Öl
6,5 Gew.-% DI-Paket
0,2 Gew.-% Stockpunktverbesserer ®Viscoplex 1-31 der Röhm GmbH, Darmstadt

II
25 Gew.-% Additiv
36,2 Gew.-% NS 100-Öl
32,1 Gew.-% NS 150-Öl
6,5 Gew.-% DI-Paket
0,2 Gew.-% Stockpunktver-verbesserer ®Viscoplex 1-31 der Röhm GmbH, Darmstadt

Das DI-Paket enthält Zink-Dialkyldithiophosphat, Polyisobutylsuccinimid, Petroleumsulfat und sterisch gehindertes Phenol. ®Viscoplex 1-31 stellt eine Lösung von Poly($C_{12}$-$C_{18}$)alkyl-methacrylat in Mineralöl der Viskosität 5,3 $mm^2$/sec bei 100°C (Ubbelohde-Viskosimeter) dar.

1) SSI = Scherstabilitätsindex = Verlust an Verdickungswirkung in % bei Scherstabilitätsmessung nach ASTM-D-2603

Tabelle 2: Beispiele

| Beispiel Nr. | Additiv Mischung | Formulierung 75W-90 | Viskosität nach ASTM-D-445 bei 100°C $mm^2/s$ | Viskosität nach ASTM-D-2983 bei -40°C mPa s | SSI[1)] |
|---|---|---|---|---|---|
| 1 | A/B = 1 | I | 13,6 | 120 000 | 8,0 |
| 2 | C/D = 0,4 | II | 13,6 | 140 000 | 3,0 |
| | | | Limit nach SAE J 306 C min. 13,5 max. 24 | max. 150 000 | |
| 3 | E/F = 1 | I | 13,6 | 135 000 | 8,0 |

I
20 Gew.-% Additiv
38,85 Gew.-% NS 100-Öl
34,45 Gew.-% NS 150-Öl
6,5 Gew.-% DI-Paket
0,2 Gew.-% Stockpunktverbesserer ®Viscoplex 1-31 der Röhm GmbH, Darmstadt

II
25 Gew.-% Additiv
36,2 Gew.-% NS 100-Öl
32,1 Gew.-% NS 150-Öl
6,5 Gew.-% DI-Paket
0,2 Gew.-% Stockpunktverbesserer ®Viscoplex 1-31 der Röhm GmbH, Darmstadt

1) SSI = Scherstabilitätsindex = Verlust an Verdickungswirkung in % bei Scherstabilitätsmessung nach ASTM-D-2603

## Patentansprüche

1. Hochscherstabile Mehrbereichsschmieröle mit verbessertem Viskositätsindex auf der Basis von paraffinischen Grundölen,

   dadurch gekennzeichnet,

   daß die hochscherstabilen Mehrbereichsschmieröle als Viskositätsindex verbessernde Additive Mischungen aus wenigstens zwei voneinander verschiedenen Polymerspecies P enthalten, wobei jede der Polymerspecies aufgebaut ist aus

a) Estern der Methacryl-, der Acrylsäure oder beiden mit geradkettigen, unverzweigten Alkoholen mit mindestens 6 und höchstens 15 Kohlenstoffatomen und

b) Estern der Methacryl-, der Acrylsäure oder beiden mit geradkettigen, unverzweigten Alkoholen mit 16 bis 30 Kohlenstoffatomen und

c) Estern der Methacryl-, der Acrylsäure oder beiden mit verzweigten Alkoholen mit 8 bis 40 Kohlenstoffatomen,

d) Estern der Methacryl-, der Acrylsäure oder beiden mit Alkoholen mit 1 bis 7 Kohlenstoffatomen,

e) radikalisch copolymerisierbaren Monomeren, die funktionelle Gruppen im Molekül aufweisen,

wobei der Anteil des Bestandteils a) 10 bis 100 Mol.-%, der Anteil des Bestandteils b) 0 bis 5 Mol.-% der Anteil des Bestandteils c) 0 bis 90 Mol.-%, der Anteil des Bestandteils d) 0 bis 50 Mol.-%, der Anteil des Bestandteils e) 0 bis 20 Mol.-% und die Summe aus a) bis e) insgesamt 100 Mol.-% ausmacht, mit der Maßgabe, daß sich die einzelnen Polymerspecies in Bezug auf den Gehalt an der Komponente a) um mindestens 10 Mol.-% unterscheiden.

2. Hochscherstabile Mehrbereichsschmieröle gemäß Anspruch 1, dadurch gekennzeichnet, daß sie zusätzlich zu den Viskositätsindex verbessernden Additiven noch 0,05 bis 1,0 Gew.-%, bezogen auf die Mehrbereichsöle an Stockpunkt verbessernden Zusätzen enthalten.

3. Verwendung der hochscherstabilen Mehrbereichsschmieröle auf Basis paraffinischer Grundöle gemäß Anspruch 1, die die viskositätsindex verbessernde Additive in Mengen von 3 bis 60 Gew.-%, vorzugsweise 12 bis 20 Gew.-% enthalten, als Mehrbereichsgetriebeöle.

## Claims

1. Multigrade lubricating oils with a high shear stability and improved viscosity index, based on paraffin base oils, characterised in that the multigrade lubricating oils with a high shear stability contain, as additives for improving their viscosity index, mixtures of at least two different types of polymer P, each type of polymer being synthesised from

a) esters of methacrylic or acrylic acid or both with straight-chained unbranched alcohols having at least 6 and at most 15 carbon atoms and

b) esters of methacrylic or acrylic acid or both with straight-chained unbranched alcohols having 16 to 30 carbon atoms and

c) esters of methacrylic or acrylic acid or both with branched alcohols having 8 to 40 carbon atoms,

d) esters of methacrylic acid or acrylic acid or both with alcohols having 1 to 7 carbon atoms,

e) radically copolymerisable monomers which have functional groups in the molecule,

the proportion of component a) being 10 to 100 Mol. per cent, the proportion of component b) being 0 to 5 Mol. per cent, the proportion of component c) being 0 to 90 Mol. per cent, the proportion of component d) being 0 to 50 Mol. per cent, the proportion of component e) being 0 to 20 Mol. per cent and the sum of a) to e) inclusive being 100 Mol. per cent, with the proviso that the individual types of polymer differ by at least 10 Mol. per cent in terms of their content of component a).

2. Multigrade lubricating oils with high shear stability according to claim 1, characterised in that they contain, in addition to the additives for improving the viscosity index, 0.05 to 1.0% by weight, based on the multigrade oils, of additives for improving the solidification point.

3. Use of the multigrade lubricating oils with high shear stability based on paraffin base oils according to claim 1, which contain additives for improving the viscosity index in amounts of from 3 to 60% by weight, preferably 12 to 20% by weight, as multigrade gear oils.

## Revendications

1. Huiles lubrifiantes multigrades à haute stabilité au cisaillement ayant un indice de viscosité amélioré, à base d'huiles minérales paraffiniques, caractérisées en ce qu'elles contiennent, en tant qu'additifs améliorant l'indice de viscosité, des mélanges d'au moins deux sortes de polymères P différentes l'une de l'autre, chacune des sortes de polymères étant constituée par

a) des esters de l'acide méthacrylique, de l'acide acrylique ou des deux et d'alcools non ramifiés à

chaîne droite renfermant au minimum 6 et au maximum 15 atomes de carbone,

b) des esters de l'acide méthacrylique, de l'acide acrylique ou des deux et d'alcools non ramifiés à chaîne droite renfermant 16 à 30 atomes de carbone,

c) des esters de l'acide méthacrylique, de l'acide acrylique ou des deux et d'alcools ramifiés renfermant 8 à 40 atomes de carbone,

d) des esters de l'acide méthacrylique, de l'acide acrylique ou des deux et d'alcools renfermant 1 à 7 atomes de carbone et

e) des monomères susceptibles de copolymérisation radicalaire, qui comportent des groupements fonctionnels dans la molécule,

la part du constituant a) étant de 10 à 100% en moles, la part du constituant b) étant de 0 à 5% en moles, la part du constituant c) étant de 0 à 90% en moles, la part du constituant d) étant de 0 à 50% en moles, la part du constituant e) étant de 0 à 20% en moles et la somme de a) à e) s'élevant au total à 100% en moles, étant spécifié que les différentes sortes de polymères diffèrent d'au moins 10% en moles en ce qui concerne leur teneur en constituant a).

**2.** Huiles lubrifiantes multigrades à haute stabilité au cisaillement selon la revendication 1, caractérisées en ce qu'elles contiennent, en plus des additifs améliorant l'indice de viscosité, de 0,05 à 1,0% en poids, par rapport aux huiles multigrades, d'additifs améliorant le point d'écoulement.

**3.** Utilisation des huiles lubrifiantes multigrades à haute stabilité au cisaillement à base d'huiles minérales paraffiniques selon la revendication 1, qui contiennent les additifs améliorant l'indice de viscosité dans des proportions de 3 à 60% en poids, de préférence de 12 à 20% en poids, comme huiles multigrades à engrenages.